(19) Europäisches Patentamt
European Patent Office
Office européen des brevets

(11) Veröffentlichungsnummer: **0 023 645**
**B1**

(12) **EUROPÄISCHE PATENTSCHRIFT**

(45) Veröffentlichungstag der Patentschrift: **28.07.82**

(51) Int. Cl.³: **C 09 B 1/22**, C 09 B 1/28, C 07 C 121/78, C 07 C 120/00

(21) Anmeldenummer: **80104227.6**

(22) Anmeldetag: **18.07.80**

# (54) Verfahren zur Herstellung von 1,4-Diamino-2,3-dicyanoanthrachinonen.

(30) Priorität: **07.08.79 DE 2931981**
**01.02.80 DE 3003657**

(43) Veröffentlichungstag der Anmeldung:
**11.02.81 Patentblatt 81/6**

(45) Bekanntmachung des Hinweises auf die Patenterteilung:
**28.07.82 Patentblatt 82/30**

(84) Benannte Vertragsstaaten:
**CH DE FR GB LI**

(56) Entgegenhaltungen:
**DE-A-1 906 834**
**DE-A-2 524 748**
**GB-A-901 059**

**Die Akte enthält technische Angaben, die nach dem Eingang der Anmeldung eingereicht wurden und die nicht in dieser Patentschrift enthalten sind.**

(73) Patentinhaber: **BAYER AG, Zentralbereich Patente, Marken und Lizenzen, D-5090 Leverkusen 1, Bayerwerk (DE)**

(72) Erfinder: **Kröck, Friedrich Wilhelm, Dr., Gerstenkamp 12, D-5000 Köln 80 (DE)**
Erfinder: **Neeff, Rütger, Dr., Berta-von-Suttner-Strasse 33, D-5090 Leverkusen 1 (DE)**
Erfinder: **Scheiter, Heinz, Dr., Feuerbachstrasse 11, D-5090 Leverkusen 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 023 645 B1

# Verfahren zur Herstellung von 1,4-Diamino-2,3-dicyano-anthrachinonen

Gegenstand der Erfindung ist ein Verfahren zur Herstellung von Verbindungen der Formel

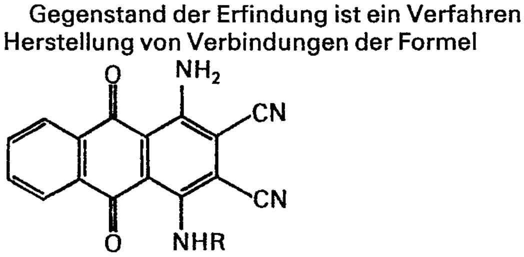

(I)

worin R Wasserstoff oder ein ggf. substituierter Alkyl- oder Cycloalkylrest ist, durch Umsetzung entsprechender 1,4-Diamino-anthrachinon-2(3)-sulfonsäuren oder deren Salzen mit Cyanidionen abgebenden Verbindungen.

Dieses Syntheseprinzip ist seit vielen Jahren bekannt (vgl. US-A 1938029 sowie US-A 3893801) und seitdem vielfach verbessert worden, indem man die Umsetzung in Gegenwart von Luft oder anderen Oxidationsmitteln und/oder Schwermetallkatalysatoren durchführte (vgl. GB-A 1212846, GB-A 901059, SU-A 148066).

Aber auch diese verbesserten Verfahren konnten nicht voll befriedigen. Bei der Nacharbeitung der angegebenen Vorschriften konnten nie die behaupteten hohen Ausbeuten an reinen Dinitrilen der Formel I erzielt werden. Infolge unvollständiger Austausch- bzw. teilweiser Rückspaltungsreaktionen (vgl. Houben-Weyl, Bd. 7, Teil 3c, Seite 239) wurden stets Reaktionsprodukte erhalten, die grössere Mengen an «Mononitrilen» enthielten, deren Abtrennung - zumindest im technischen Masstab - nicht ganz einfach ist.

Gemäss US-A 4042605 (entspricht DE-A-2524748) wird nun dem erfindungsgemäss angewandten «Sulfonsäure-/Cyanid-Austausch» angelastet, dass das hierfür als Ausgangsmaterial benötigte 1-Amino-anthrachinon und damit die daraus hergestellten β-Sulfonsäuren nur aus einer durch Quecksilber katalysierten Sulfonierungsreaktion zugänglich seien, so dass man die Titelverbindungen demzufolge besser aus ggf. β-halogenierten 1,4-Diamino-anthrachinonen in Gegenwart aprotischer Lösungsmittel herstellt.

Abgesehen davon, dass auch diese Verfahrensvariante bei der Nacharbeitung nur mässige bis mittlere Ausbeuten an maximal 50% Dinitril der Formel I enthaltenden Produkten lieferte, ist der Einwand gegen die Verwendung der β-Sulfonsäuren als Ausgangsmaterialien für den «Cyanidaustausch» unbegründet, da zwischenzeitlich Methoden entwickelt worden sind, die eine praktisch vollständige Abtrennung von Quecksilber erlauben, bzw. inzwischen quecksilberfreie Synthesewege zur Herstellung von 1-Amino-anthrachinon (z.B. ausgehend von 1-Nitro-anthrachinon) zur technischen Reife gebracht worden sind.

Aufgabe der vorliegenden Erfindung war es daher, ausgehend von den nunmehr gutzugänglichen β-Sulfonsäuren die Verbindungen der Formel I in hohen Ausbeuten und insbesondere hohen Reinheiten herzustellen.

Erfindungsgemäss wird diese Aufgabe dadurch gelöst, dass man die Umsetzung der β-Sulfonsäuren mit Cyanidionen abgebenden Verbindungen in Formamid oder N-Methyl-formamid - vorzugsweise in Gegenwart eines Oxidationsmittels und ggf. in Anwesenheit von säurebindenden Mitteln - vornimmt. Bevorzugt ist die Verwendung von Formamid.

Es ist als ausserordentlich überraschend zu bezeichnen, dass die Reaktion in den erfindungsgemäss zu verwendenden Lösungsmitteln so glatt verläuft, da in anderen technisch gebräuchlichen Lösungsmitteln, wie z.B. Wasser, Dimethylformamid, N-Methylpyrrolidon, Dimethyl-sulfoxid, Sulfolan, Pyridin, Ethylenglykol, Diethylenglykol, Dimethylacetamid, Tetramethylharnstoff usw., die Ausbeuten unter vergleichbaren Reaktionsbedingungen wesentlich geringer sind.

Die Menge der erfindungsgemäss einzusetzenden Lösungsmittel kann innerhalb eines grösseren Bereichs schwanken und hängt im wesentlichen von der Löslichkeit der Reaktionspartner ab. Auf jeden Fall soll sich ein gut rührbares System bilden, in dem die Ausgangsmaterialien vorzugsweise vollständig gelöst sind.

Im allgemeinen benötigt man dafür 1-5 kg Lösungsmittel pro Mol β-Sulfonsäure.

Die β-Sulfonsäuren und deren Salze sind bekannt bzw. nach an sich bekannten Methoden gut zugänglich.

Geeignete β-Sulfonsäuren sind 1,4-Diamino-anthrachinon-2-sulfonsäure, 1,4-Diamino-anthrachinon-2,3-disulfonsäure bzw. deren an der Aminogruppe in 4-Stellung durch den Rest R substituierten Derivate.

Geeignete Reste R sind: $C_1$–$C_6$-Alkyl, $C_1$–$C_4$-Alkoxy-$C_2$–$C_5$-alkyl, das in der Alkoxygruppe zusätzlich durch eine Hydroxygruppe substituiert sein kann, sowie Cyclohexyl, das ein- bis dreimal durch $C_1$–$C_3$-Alkylreste substituiert sein kann. Vorzugsweise steht R für H oder $C_1$–$C_6$-Alkyl.

Besonders bevorzugt ist die 1,4-Diamino-anthrachinon-2-sulfonsäure, die z.B. besonders umweltfreundlich und kostensparend aus 1-Amino-anthrachinon (quecksilberfrei) durch Sulfonieren, Bromieren und Brom-/Amino-Austausch erhältlich ist.

Zur Durchführung des erfindungsgemässen Verfahrens sind sowohl die freie Säure als auch ihre Salze mit verschiedenen Metallen, insbesondere mit Alkalimetallen, sowie ihre Ammoniumsalze geeignet.

Geeignete Oxidationsmittel sind sowohl anorganische Oxidationsmittel, wie Luft, Sauerstoff, Nitrite, Nitrate, Mangandioxid, Natriumchlorit, Kaliumbromat, Ammoniumpersulfat und Kaliumpersulfat, Wasserstoffperoxid und seine Additionsverbindungen, wie Natriumpercarbonat, Natriumperborat und Natriumperpyrophosphat, als auch organische Oxidationsmittel wie zum Beispiel Peressigsäure, die Additionsverbindung von Harnstoff und Wasserstoffperoxid, Nitrobenzol,

m-Nitrobenzoesäure und deren Salze und m-Nitrobenzolsulfonsäure und deren Salze. Bevorzugt ist die Verwendung von Nitrobenzol, m-Nitrobenzolsulfonsäure und ihren Salzen, sowie Sauerstoff, vorteilhaft in Form von Luftsauerstoff, ggf. in Gegenwart von Schwermetallkatalysatoren, wie Ammoniummolybdat, Ammoniumvanadat, oder Kupferverbindungen, z.B. Kupferacetat.

Auch die Reaktionstemperaturen können innerhalb eines grösseren Bereichs, d.h. zwischen 40 und 200°C schwanken. Im allgemeinen arbeitet man in dem für dieses Syntheseprinzip üblichen Temperaturbereich, nämlich zwischen 60 und 120°C.

Auf ein Mol der umzusetzenden 1,4-Diamino-anthrachinon-2-sulfonsäure bzw. -2,3-disulfonsäure verwendet man zweckmässigerweise zwischen 0,2 und 2 Mol Nitrobenzol oder m-Nitrobenzolsulfonsäure, ggf. in Form eines ihrer Salze. Die Menge der anderen Oxidationsmittel wird entsprechend ihren Redoxäquivalenten bemessen. Dabei ist ein Unterschuss an Oxidationsmittel wegen der Bildung von Nebenprodukten ebenso zu vermeiden, wie ein grösserer Überschuss wegen seiner Wechselwirkung mit den Cyanidionen (vgl. GB-PS 901 059). Im Gegensatz zu den Angaben in diesem Patent, die sich auf wässrige Reaktionsmedien beziehen, ist es hier bei Verwendung von Formamid oder N-Methylformamid allerdings nicht nötig, das Oxidationsmittel während der Reaktion einzudosieren, sondern es kann von Anfang an in der durch Versuche zu ermittelnden optimalen Menge zugegeben werden.

Geeignete säurebindende Mittel sind insbesondere: Alkalimetall- und Erdalkalimetallsalze schwacher Säuren, wie zum Beispiel Natriumcarbonat, Natriumhydrogencarbonat, Kaliumcarbonat, Natriumacetat, Kaliumacetat, Magnesiumcarbonat und Calciumcarbonat, ausserdem Ammoniumcarbonat und -hydrogencarbonat. Ihre einzusetzende Menge wird hauptsächlich davon bestimmt, in welcher Form die 1,4-Diamino-anthrachinon-sulfonsäure eingesetzt wird. Geht man von der freien Säure aus, oder verwendet man freie Blausäure als Cyanidionen abgebende Verbindung, so ist es zweckmässig, mindestens die äquivalente Menge eines säurebindenden Mittels zuzusetzen. Ein Überschuss an säurebindendem Mittel beeinflusst die Reaktion nicht negativ.

Geeignete Cyanidionen abgebende Verbindungen sind insbesondere Alkalimetall- und Erdalkalimetallcyanide, wie Natrium-, Kalium- oder Magnesiumcyanid, sowie weiterhin Ammoniumcyanid, Zinkcyanid, Kupfer(I)-cyanid, komplexe Kupfer- und Zinkcyanide, Blausäure, Cyanhydrine von Aldehyden und Ketonen u.a.m. Bevorzugt sind Natriumcyanid und Kaliumcyanid. Die Menge der Cyanidionen abgebenden Verbindung ist so zu bemessen, dass auf je 1 Mol der 1,4-Diamino-anthrachinon-2-sulfonsäure bzw. -2,3-disulfonsäure oder deren Salze mindestens 2 Mol, vorteilhaft 2,5 bis 10 Mol eingesetzt werden.

Die Reaktion ist beendet, wenn das Dünnschichtchromatogramm die restlose Umsetzung des Ausgangsmaterials anzeigt. Das ist im allgemeinen nach 2–20 Stunden der Fall und hängt von der umzusetzenden β-Sulfonsäure ab. Verwendet man die bevorzugte 1,4-Diamino-anthrachinon-2-sulfonsäure, so ist die Reaktion im allgemeinen nach 4 Stunden beendet.

Die Aufarbeitung des Reaktionsgemisches ist sehr einfach, da das Dinitril der Formel I in der Regel schwerer löslich ist als die Ausgangsmaterialien und somit durch Filtration leicht isoliert werden kann.

Aus dem Filtrat kann das Lösungsmittel durch einfache Destillation zurückgewonnen werden, wodurch das Verfahren nicht nur kostensparend ist, sondern auch Abwasserprobleme vermeidet. Die Reaktionsprodukte fallen unmittelbar in hoher Reinheit an (weniger als 3% «Mononitril»), was für ihre Verwendung als Farbstoffe bzw. Ausgangsprodukte zur Herstellung von wertvollen Farbstoffen (vgl. US-PS 2628963 und 3203751) von grosser Bedeutung ist, da grössere Gehalte an «Mononitril» den brillanten grünstichig blauen Farbton nach weniger erwünschten rotstichigen Nuancen verschieben.

Ein weiterer Vorteil des neuen Herstellungsverfahrens für diese Produkte ist darin zu sehen, dass die Verwendung von Formamid oder N-Methylformamid als Lösungsmittel eine derartige Herabsetzung der Lösungsmittelmenge gestattet, dass die Raum-Zeit-Ausbeute gegenüber den bekannten Verfahren mit Wasser als Lösungsmittel auf etwa den zehnfachen Wert gesteigert werden kann.

Ein weiterer Gegenstand der vorliegenden Erfindung sind neue 1,4-Diamino-2,3-dicyano-anthrachinone der Formel (I), worin R für einen ggf. substituierten Cycloalkylrest, vorzugsweise einen ggf. durch 1–3 Methylgruppen substituierten Cyclohexylrest steht.

Beispiel 1

Ein Gemisch aus 202,8 g 78,4%iger 1,4-Diamino-anthrachinon-2-sulfonsäure (salzhaltig), 41 g trockenem Natriumacetat, 112,5 g trockenem 3-nitrobenzolsulfonsaurem Natrium, 73,5 g Natriumcyanid und 1200 ccm Formamid wird unter Rühren auf 80–85°C erhitzt, bis man nach ca. 3,5–4 Std. kein Ausgangsmaterial mehr durch Dünnschichtchromatographie (DC) nachweisen kann. Das Reaktionsgemisch wird noch warm abgesaugt, der Nutschkuchen einmal mit 100 ccm Formamid kalt nachgewaschen und dann mit heissem Wasser bis zum farblosen Ablauf gewaschen. Nach dem Trocknen bei 60°C erhält man 144 g eines dunkelblauen, kristallinen Produktes, das laut Analyse 91,4% 1,4-Diamino-2,3-dicyano-anthrachinon und 1,9% 1,4-Diamino-2-cyano-anthrachinon enthält. Das entspricht einer Reinausbeute von 91,4% Dinitril. Das Formamid kann aus der Mutterlauge durch Destillation im Wasserstrahlvakuum zurückgewonnen und anschliessend wieder für die Umsetzung eingesetzt werden.

Statt Natriumacetat können bei der Reaktion mit gleichem Erfolg eingesetzt werden: 84 g Natriumhydrogencarbonat, 53 g Natriumcarbonat, 5 g Calciumcarbonat, 69 g Kaliumcarbonat, 49 g Kaliumacetat oder 20 g Magnesiumoxid.

Beispiel 2

Ein Gemisch aus 189,1 g 84,1%iger 1,4-Diamino-anthrachinon-2-sulfonsäure, 56,3 g trockenem 3-nitrobenzolsulfonsaurem Natrium, 73,5 g Natriumcyanid und 1200 ccm Formamid wird unter Rühren auf 90°C erhitzt, bis man nach ca. 4 Std. kein Ausgangsmaterial mehr durch DC nachweisen kann. Das Reaktionsgemisch wird noch warm abgesaugt und der Nutschkuchen wie in Beispiel 1 gewaschen und getrocknet. Ausbeute: 142 g eines dunkelblauen, kristallinen Produktes, das laut Analyse 92,1% 1,4-Diamino-2,3-dicyano-anthrachinon und 2,3% 1,4-Diamino-2-cyano-anthrachinon enthält. Das entspricht einer Reinausbeute von 90,8% Dinitril.

Statt Natriumcyanid können auch die folgenden Cyanidionen abgebenden Verbindungen mit ähnlichen Erfolgen eingesetzt werden: 97,5 g Kaliumcyanid, 37,8 g Magnesiumcyanid, 68,6 g Zinkcyanid oder 66 g Ammoniumcyanid.

Beispiel 3

Ein Gemisch aus 170,6 g 93,2%iger 1,4-Diamino-anthrachinon-2-sulfonsäure, 41 g trockenem Natriumacetat, 62 g Nitrobenzol, 73,5 g Natriumcyanid und 1200 ccm Formamid wird unter Rühren auf 90°C erhitzt, bis man nach ca. 3,5 Std. kein Ausgangsmaterial mehr durch DC nachweisen kann. Das Reaktionsgemisch wird noch warm abgesaugt und der Nutschkuchen wie in Beispiel 1 gewaschen und getrocknet. Ausbeute: 140 g eines dunkelblauen, kristallinen Produktes, das laut Analyse 90,3% 1,4-Diamino-2,3-dicyano-anthrachinon und 1,6% 1,4-Diamino-2-cyano-anthrachinon enthält. Das entspricht einer Reinausbeute von 87,8% Dinitril.

Mit ähnlichem Erfolg können statt des Nitrobenzols auch folgende Oxidationsmittel eingesetzt werden: 83,5 g 3-nitrobenzolcarbonsaures Natrium, 35 g Natriumnitrit, 43 g Natriumnitrat. Ähnliche Ergebnisse werden auch erhalten, wenn man als Oxidationsmittel einsetzt: Mangandioxid, Natriumchlorit, Kaliumbromat, Ammoniumpersulfat, Kaliumpersulfat, Wasserstoffperoxid, Natriumpercarbonat, Natriumperborat, Natriumperpyrophosphat, Peressigsäure oder die Additionsverbindung aus Harnstoff und Wasserstoffperoxid.

Beispiel 4

Ein Gemisch aus 31,8 g 93,9%iger 1,4-Diamino-anthrachinon-2-sulfonsäure, 240 ccm Formamid, 14,7 g Natriumcyanid, 8,2 g trockenem Natriumacetat und 0,68 g Ammoniumvanadat wird unter Durchleiten von 6,4 l/Stunde Luft so lange auf 80°C erhitzt, bis das Ausgangsmaterial völlig umgesetzt ist (ca. 2,5 Std.). Man arbeitet das Reaktionsgemisch so auf, wie es in den vorstehenden Beispielen beschrieben ist und erhält 24,0 g eines dunkelblauen, kristallinen Produkts, das laut Analyse 90,9% 1,4-Diamino-2,3-dicyano-anthrachinon und 0,9% 1,4-Diamino-2-cyano-anthrachinon enthält. Das entspricht einer Reinausbeute von 80,6% Dinitril.

Mit dem gleichen Erfolg kann man statt Luft auch einen entsprechend schwächeren Sauerstoff-Strom durch das Gemisch leiten oder statt Ammoniumvanadat 0,68 g Ammoniummolybdat oder 1,0 g Kupferacetat als Katalysator einsetzen.

Beispiel 5

Ein Gemisch aus 211 g 1,4-diamino-anthrachinon-2,3-disulfonsaurem Natrium, 73,5 g Natriumcyanid, 82 g trockenem Natriumacetat und 1200 ccm Formamid wird bis zur vollständigen Umsetzung der Disulfonsäure (ca. 3 Std.) auf 50°C erhitzt. Das auskristallisierte Produkt wird noch warm abgesaugt, mit heissem Wasser bis zum farblosen Ablauf gewaschen und bei 60°C getrocknet. Ausbeute: 127 g eines dunkelblauen, kristallinen Produkts, das laut Analyse 95,2% 1,4-Diamino-2,3-dicyano-anthrachinon und kein Mononitril enthält. Das entspricht einer Reinausbeute von 87,9% Dinitril.

Beispiel 6

Ein Gemisch aus 174 g 91,2%iger 1,4-Diamino-anthrachinon-2-sulfonsäure (als Na-Salz), 1200 ccm N-Methyl-formamid, 63,7 g Natirumcyanid, 62,0 g Nitrobenzol und 41 g Natriumacetat wird so lange auf 80–85°C unter Rühren erhitzt, bis nach ca. 8 Std. das Ausgangsmaterial laut DC restlos umgesetzt ist. Das Reaktionsgemisch wird wie in Beispiel 1 beschrieben aufgearbeitet. Nach dem Trocknen erhält man 133 g eines dunkelblauen kristallinen Produkts, das laut Analyse 85,5% 1,4-Diamino-2,3-dicyano-anthrachinon und kein 1,4-Diamino-2-cyano-anthrachinon enthält. Das entspricht einer Reinausbeute von 78,9%.

Beispiel 7

Ein Gemisch aus 2 g trockenem Natriumcarbonat, 75 ccm Formamid und 2,3 g Eisessig wird verrührt und mit 6,25 g Ammoniumhydrogencarbonat, 12,7 g trockenem 3-nitrobenzolsulfonsaurem Natrium, 8,25 g Natriumcyanid und 10 g 1-amino-4-cyclohexylamino-anthrachinon-2-sulfonsaurem Natrium versetzt. Man erhitzt auf 80°C, tropft in ca. 1 Stunde noch 7,5 g Eisessig hinzu und hält dann unter Rühren so lange auf 80–85°C, bis das Ausgangsmaterial restlos umgesetzt ist (ca. 5 bis 6 Std.). Der ausgefallene Farbstoff wird nach dem Abkühlen abgesaugt, mit heissem Wasser bis zum farblosen Ablauf gewaschen und bei 60°C getrocknet. Ausbeute: 8,4 g dunkelblaue Kristalle, entsprechend 95,8% d.Th. Wie das Massenspektrum und das Dünnschichtchromatogramm zeigen, handelt es sich hauptsächlich um das 1-Amino-4-cyclohexylamino-2,3-dicyano-anthrachinon mit der Molmasse 370. Stickstoffgehalt berechnet 15,12%, gefunden 14,9/15,0%.

Beispiel 8

Ganz entsprechend wie in Beispiel 7 entstehen aus 10 g 1-amino-4-isopropylamino-anthrachinon-2-sulfonsaurem Natrium (hergestellt aus Isopropylamin und 1-Amino-4-brom-anthrachinon-2-sulfonsäure) 7,8 g dunkelblaue Kristalle, entsprechend 90,2% d.Th. Stickstoff-Gehalt berechnet 16,96%, gefunden 17,1/17,2%. Wie Massenspektrum und Dünnschichtchromatogramm zeigen, handelt es sich um das Mononitril-freie 1-Amino-4-isopropylamino-2,3-dicyano-anthrachinon.

Beispiel 9

Ein Gemisch aus 17,7 g 1-amino-4-methylamino-anthrachinon-2-sulfonsaurem Natrium, 4,1 g trockenem Natriumacetat, 11,25 g trockenem 3-nitrobenzolsulfonsaurem Natrium, 7,35 g Natriumcyanid und 120 ccm Formamid wird unter Rühren auf 80–85°C erhitzt, bis man nach ca. 5 Std. kein Ausgangsmaterial mehr durch Dünnschichtchromatographie nachweisen kann. Das Reaktionsgemisch wird mit 120 ccm Wasser verdünnt, bei 50°C abgesaugt, der Nutschkuchen mit heissem Wasser bis zum farblosen Ablauf gewaschen und bei 60°C getrocknet. Ausbeute: 13,5 g, entsprechend 89,4% d.Th. eines dunkelblauen, kristallinen Produktes, das laut Massenspektrum und Dünnschichtchromatogramm hauptsächlich aus 1-Amino-4-methylamino-2,3-dicyano-anthrachinon besteht.

Tabelle: Beispiele 10–17

Ganz entsprechend wie in den vorstehenden Beispielen beschrieben, erhält man aus den Sulfonsäuren (II), die aus 1-Amino-4-brom-anthrachinon-2-sulfonsäure und dem entsprechenden Amin zugänglich sind, die Dinitrile (I):

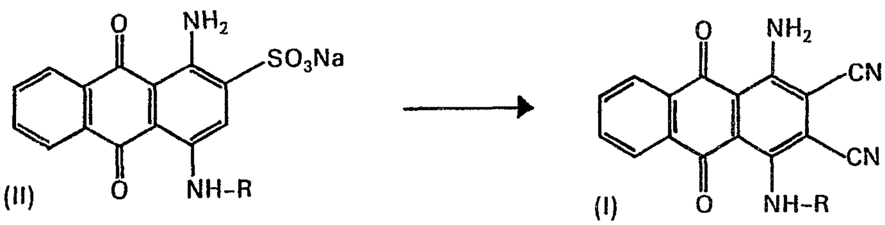

(II) (I)

| Bsp.-Nr. | R | Ausbeute (%) |
|---|---|---|
| 10 | 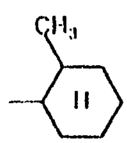 | 86,2 |
| 11 | 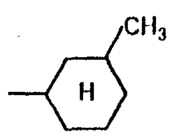 | 87,4 |
| 12 | 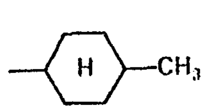 | 89,2 |
| 13 | 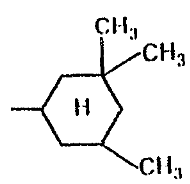 | 76,5 |
| 14 | $-(CH_2)_3-CH_3$ | 75,9 |
| 15 | $-(CH_2)_2-OCH_3$ | 82,0 |
| 16 | $-(CH_2)_3-OC_2H_5$ | 79,5 |
| 17 | $-(CH_2)_5-CH_3$ | 87,2 |

Mit ähnlich guten Ausbeuten lassen sich auch die folgenden Dinitrile herstellen:

1-Amino-4-(2-butoxy-ethylamino)-2,3-dicyano-anthrachinon,
1-Amino-4-(4-methoxy-butylamino)-2,3-dicyano-anthrachinon,
1-Amino-4-(5-ethoxy-pentylamino)-2,3-dicyano-anthrachinon,
1-Amino-4-[2-(2-hydroxy-ethoxy)-ethylamino]-2,3-dicyano-anthrachinon.

**Patentansprüche**

1. Verfahren zur Herstellung von 2,3-Dicyano-anthrachinonen der Formel

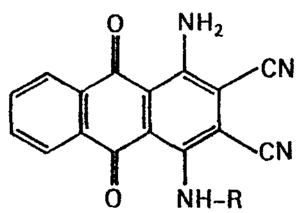

worin
R Wasserstoff, gegebenenfalls substituiertes Alkyl oder gegebenenfalls substituiertes Cycloalkyl bedeutet, durch Umsetzung von Sulfonsäuren der Formel

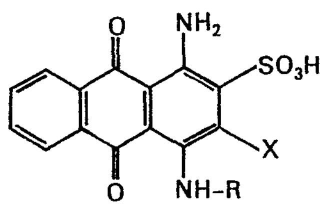

oder deren Salzen,
worin
R die oben genannte Bedeutung hat und
X Wasserstoff oder die Sulfonsäuregruppe
bedeutet, mit Cyanidionen abgebenden Verbindungen, ggf. in Gegenwart von Oxidationsmitteln, Schwermetallkatalysatoren und säurebindenden Mitteln, dadurch gekennzeichnet, dass die Reaktion in Formamid oder N-Methyl-formamid durchgeführt wird.

2. Verfahren nach Anspruch 1, dadurch gekennzeichnet, dass die Umsetzung in Formamid durchgeführt wird.

3. Verfahren nach Anspruch 1, dadurch gekennzeichnet, dass man als Oxidationsmittel Luft, Sauerstoff, Nitrobenzol oder m-Nitrobenzolsulfonsäure und deren Salze verwendet.

4. Verfahren nach Anspruch 1, dadurch gekennzeichnet, dass man als Oxidationsmittel Luft in Gegenwart von Schwermetallkatalysatoren verwendet.

5. Verfahren nach Anspruch 1, dadurch gekennzeichnet, dass man als Cyanidionen abgebende Verbindungen Natriumcyanid oder Kaliumcyanid verwendet.

6. Verfahren nach Anspruch 1, dadurch gekennzeichnet, dass man als Sulfonsäuren 1-Amino-4-alkylamino-, 1-Amino-4-cycloalkylamino- oder 1,4-Diamino-anthrachinon-2-sulfonsäure oder deren Salze einsetzt.

7. Verfahren nach Anspruch 1, dadurch gekennzeichnet, dass man als Sulfonsäure 1,4-Diamino-anthrachinon-2,3-disulfonsäure oder deren Salze einsetzt.

**Claims**

1. Process for the preparation of 2,3-dicyano-anthraquinones of the formula

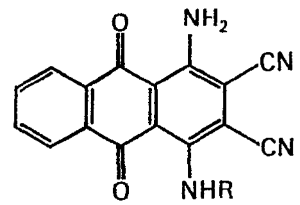

wherein
R denotes hydrogen, optionally substituted alkyl or optionally substituted cycloalkyl,
by reacting sulphonic acids of the formula

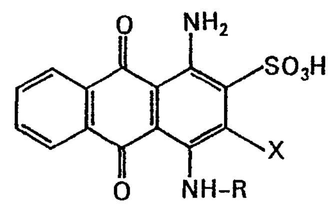

or salts thereof,
wherein
R has the abovementioned meaning and
X denotes hydrogen or the sulphonic acid group,
with compounds which donate cyanide ions, optionally in the presence of oxidising agents, heavy metal catalysts and acid-binding agents, characterised in that the reaction is carried out in formamide or N-methyl-formamide.

2. Process according to Claim 1, characterised in that the reaction is carried out in formamide.

3. Process according to Claim 1, characterised in that air, oxygen, nitrobenzene or m-nitrobenzenesulphonic acid or salts thereof is used as the oxidising agent.

4. Process according to Claim 1, characterised in that air, in the presence of heavy metal catalysts, is used as the oxidising agent.

5. Process according to Claim 1, characterised in that sodium cyanide or potassium cyanide is used as the compound which donates cyanide ions.

6. Process according to Claim 1, characterised in that 1-amino-4-alkylamino-, 1-amino-4-cycloalkylamino- or 1,4-diamino-anthraquinone-2-sulphonic acids or salts thereof are employed as the sulphonic acids.

7. Process according to Claim 1, characterised in that 1,4-diamino-anthraquinone-2,3-disulf-

phonic acid or a salt thereof is employed as the sulphonic acid.

**Revendications**

1. Procédé de production de 2,3-dicyano-anthraquinones de formule:

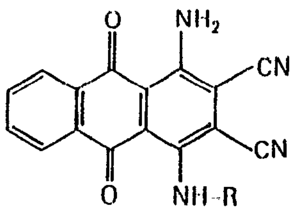

dans laquelle:
R est l'hydrogène, un reste alkyle éventuellement substitué ou un reste cylcoalkyle éventuellement substitué, par réaction d'acides sulfoniques de formule:

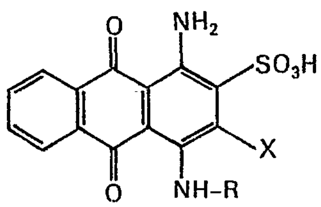

ou de leurs sels,
où
R a la définition donnée ci-dessus et
X représente l'hydrogène ou le groupe acide sulfonique, avec des composés libérant des ions cyanure, éventuellement en présence d'agents oxydants, de catalyseurs à base de métaux lourds et d'accepteurs d'acides,
caractérisé en ce que la réaction est conduite dans le formamide ou dans le N-méthylformamide.

2. Procédé suivant la revendication 1, caractérisé en ce que la réaction est conduite dans le formamide.

3. Procédé suivant la revendication 1, caractérisé en ce qu'on utilise comme agent oxydant l'air, l'oxygène, le nitrobenzène ou l'acide m-nitrobenzène-sulfonique et ses sels.

4. Procédé suivant la revendication 1, caractérisé en ce qu'on utilise comme agent oxydant l'air en présence de catalyseurs à base de métaux lourds.

5. Procédé suivant la revendication 1, caractérisé en ce qu'on utilise comme composés libérant des ions cyanure, le cyanure de sodium ou le cyanure de potassium.

6. Procédé suivant la revendication 1, caractérisé en ce qu'on utilise comme acides sulfoniques un acide 1-amino-4-alkylamino-sulfonique, un acide 1-amino-4-cycloalkylamino-sulfonique ou l'acide 1,4-diamino-anthraquinone-2-sulfonique ou leurs sels.

7. Procédé suivant la revendication 1, caractérisé en ce qu'on utilise comme acide sulfoniue l'acide 1,4-diamino-anthraquinone-2,3-disulfonique ou ses sels.